# EUROPÄISCHE PATENTSCHRIFT

(11) **EP 3 362 261 B1**
(45) Veröffentlichungstag und Bekanntmachung des Hinweises auf die Patenterteilung: **11.12.2024**
(21) Anmeldenummer: 16795220.9
(22) Anmeldetag: 13.10.2016
(51) Int. Cl.: B29C 64/141, B29C 67/00, G03F 7/20, B32B 37/16, B29C 65/48, G06K 15/02, G06K 15/14, B29C 64/147, B29C 64/182, B32B 37/00, B32B 38/00, B32B 38/18, B32B 39/00, B33Y 10/00, G03G 15/22

(54) **VERFAHREN UND VORRICHTUNG ZUR HERSTELLUNG EINES WERKSTÜCKS**
METHOD AND DEVICE FOR PRODUCING A WORKPIECE
PROCÉDÉ ET DISPOSITIF DE FABRICATION D'UNE PIÈCE

(30) Priorität: 13.10.2015 DE 102015117418
(43) Veröffentlichungstag der Anmeldung: 22.08.2018
(73) Patentinhaber: mz Toner Technologies GmbH & Co. KG, 66119 Saarbrücken (DE)
(72) Erfinder: ZIMMER, Michael, 66111 Saarbrücken (DE)
(74) Vertreter: Patentanwälte Bernhardt / Wolff Partnerschaft mbB
(86) Internationale Anmeldenummer: PCT/DE2016/100476
(87) Internationale Veröffentlichungsnummer: WO 2017/063640

(56) Entgegenhaltungen:
- EP-A1- 2 886 307
- JP-A- 2003 159 754
- US-A- 5 352 310
- US-A1- 2013 075 013
- US-A1- 2013 077 997
- US-A1- 2013 186 558
- US-A1- 2014 182 775
- US-A1- 2015 024 169

## Beschreibung

Die Erfindung betrifft ein Herstellungsverfahren, bei dem ein Werkstück nach und nach schichtweise aufgebaut wird und zum Aufbau des Werkstücks jeweils eine vorgebildete Schicht, die mittels eines elektrofotografischen Druckverfahrens auf einem Schichtträger gebildet wird, von dem Schichtträger auf das Werkstück übertragen wird , wobei der Schichtträger nach Bedruckung mittels des elektrofotografischen Druckverfahrens vollständig auf eine Rolle aufgerollt wird. Die Erfindung betrifft ferner eine Vorrichtung zum sukzessiven schichtweisen Aufbau eines Werkstücks sowie einen Schichtträger mit Rolle.

US 2014/0182775 A1 beschreibt ein Verfahren zum Herstellen eines Werkstücks aus mehreren Schichten. Bei dem Verfahren wird mittels eines Siebdruckverfahrens ein Trägermaterial mit einem aus Polyesterharz gebildeten Schichten belegt und der Polyesterharz getrocknet. Das auf eine Rolle aufgerollte Trägermaterial wird in einer Vorrichtung angeordnet, von der Rolle abgerollt und das Werkstück aufgebaut, indem die Schichten von dem Trägermaterial auf das Werkstück übertragen werden.

Ein weiteres Herstellungsverfahren geht aus der US 2015/0024168 A1 hervor, in der ein Verfahren zum Drucken eines dreidimensionalen Teils und einer Trägerstruktur mit einem auf Elektrofotographie basierenden additiven Fertigungssystem. Bei dem Verfahren wird eine Trägerschicht der Trägerstruktur aus einem löslichen Trägermaterial mit einer ersten Elektrofotographievorrichtung gebildet und die Trägerschicht auf ein Übertragungsmedium übertragen. Ferner wird eine Schicht des dreidimensionalen Teils aus einem ABS-Material mittels einer zweiten Elektrofotographievorrichtung gebildet und ebenfalls auf das Übertragungsmedium übertragen. Die Trägerschicht und die Schicht werden anschließend nach und nach schichtweise miteinander verbunden und zu dem Werkstück aufgebaut.

Ein weiteres Verfahren zum Herstellen eines Werkstücks aus mehreren Schichten ist aus US 2013/186558 A1 bekannt.

Verschiedene Herstellungsverfahren zum schichtweisen Aufbau eines Werkstücks sind durch Benutzung bekannt und werden zum Rapid Prototyping verwendet. Eines dieser Verfahren ist MultiJet Modeling, bei dem mittels eines Druckkopfes, der mehrere Düsen aufweist, Werkstücke schichtweise aufgebaut werden. Beim Laminated Object Manufacturing werden zum Aufbau von Werkstücken Schichten aus Keramik-, Kunststoff- oder Metallfolien oder aus Papier miteinander laminiert. Bei der Stereolithografie werden Werkstücke nach und nach aufgebaut, indem ein flüssiges Fotopolymer mittels eines Lasers schichtweise ausgehärtet wird.

Die bekannten Verfahren haben den Nachteil, dass sie langwierig sind und sich deshalb nicht zur Produktion größerer Mengen eignen.

Der Erfindung liegt die Aufgabe zugrunde, ein Verfahren der eingangs genannten Art zu schaffen, mit dem sich das Herstellungsverfahren flexibler handhaben und schneller durchführen lässt.

Erfindungsgemäß wird diese Aufgabe dadurch gelöst, die Schicht aus unterschiedlichen Materialien gebildet wird und zumindest eine der Schichten aus mehreren übereinander angeordneten Teilschichten gebildet wird.

Zur Bildung des Werkstücks werden sukzessive mehrere der Schichten untereinander verbunden und der Schichtträger von der jeweilig mit dem Werkstück verbundenen Schichten gelöst. Da sich eine Übertragung der Schichten in hohen Frequenzen durchführen lässt und nicht nur ein einzelnes Werkstück herstellen lässt, sondern auch gleichzeitig eine Vielzahl von Werkstücken aufgebaut werden können, eignet sich das erfindungsgemäße Verfahren für eine Massenproduktion.

Der Schichtträger wird auf die Rolle aufgerollt, damit er einfach gelagert oder/und transportiert werden kann. Um die Schichten auf das Werkstück zu übertragen, wird der Schichtträger zusammen mit den Schichten wieder abgerollt und zu der Übertragungseinrichtung bewegt.

Der Verfahrensschritt des Druckens des Schichtträgers, der im Vergleich zur Übertragung der Schicht von dem Schichtträger zur Bildung das Werkstück wesentlich schneller ist, und der Verfahrensschritt zur Schichtübertragung können voneinander getrennt werden. Dadurch kann die Herstellung der Schichten sowie des Werkstücks besser gehandhabt werden.

Ferner wird die Möglichkeit eröffnet, die elektrofotografische Druckeinrichtung an einem anderen Standort vorzusehen als die Übertragungseinrichtung. Gegebenenfalls können von einer einzigen Druckeinrichtung aus mehrere, ggf. an verschiedenen Standorten vorgesehene, Übertragungseinrichtungen mit den Schichtträgern, die mit den Schichten versehen sind, versorgt werden.

Der Schichtträger und die darauf angeordneten Schichten bilden, wenn der Schichtträger vollständig auf die Rolle ist aufgerollt ist und die Rolle zur Benutzung in einer Einrichtung zur Übertragung der Schicht von dem Schichtträger auf das Werkstück eingerichtet ist, in dem erfindungsgemäßen Verfahren ein Zwischenprodukt.

In einer Ausgestaltung der Erfindung wird die Schicht mittels einer Übertragungseinrichtung der eingangs genannten Vorrichtung in einem Druckvorgang auf das Werkstück übertragen. Die Schicht wird zweckmäßigerweise an das Werkstück, das auf einem, vorzugsweise bewegbaren, Werkstückträger aufgebaut wird, angelegt, wobei vorzugsweise der Schichtträger hin zu dem Werkstück oder/und das Werkstück hin zu dem Schichtträger bewegt wird. Die Schicht kann unter geringfügigem Druck, der vorzugsweise mittels eines Stempels auf die Schicht ausgeübt wird, mit dem Werkstück verbunden werden.

Alternativ oder ergänzend dazu können die Schicht und das Werkstück derart elektrisch geladen oder/und magnetisiert werden, dass die Schicht durch eine elektrische bzw. magnetische Anziehungs- oder Abstoßungskraft auf das Werkstück bewegt wird. Während es vorstellbar wäre, die Schicht vor Ihrer Übertragung auf das Werkstück auf einem Zwischenträger, beispielsweise wie beim Offsetdruck auf einem Zylinder, anzuordnen und erst von dort direkt auf das Werkstück zu übertragen, weist die Übertragungseinrichtung in einer bevorzugten Ausführungsform der Erfindung einen Stempel auf, der zur Anlage an dem Schichtträger vorgesehen ist und bei der Übertragung der Schicht als Gegenhalter für die Schicht dient.

Zweckmäßigerweise wird zur Übertragung der Stempel hin zum Werkstück und/oder das Werkstück, vorzugsweise durch Bewegen des Werkstückträgers, hin zum Stempel bewegt und der Stempel und das Werkstück nach Anlegen der Schicht wieder voneinander wegbewegt, wobei sich die Schicht von dem Trägerelement ablöst. Damit sich die genannte elektrische oder/und magnetische Anziehungs- oder Abstoßungskraft ausbildet, könnte die Vorrichtung mit einer Einrichtung zur Anlegung eines elektrischen Feldes an die Schicht und/oder den Stempel einerseits und das Werkstück andererseits versehen, um die Übertragung mittels elektrostatischer Anziehungs- bzw. Abstoßungskräfte zu unterstützen. Der Stempel könnte elektrisch ladbar und/oder magnetisiert oder magnetisierbar vorgesehen sein. Ferner wäre vorstellbar den Stempel selbst als Elektromagneten auszubilden oder am Stempel oder in der Nähe des Stempels einen Elektromagneten anzuordnen, mittels dessen ein magnetisches Feld zur Übertragung der Schicht jeweils zu den Zeitpunkten ausgebildet wird, zu denen die Schicht auf das Werkstück zu übertragen ist.

Die genannte Übertragungseinrichtung ist zweckmäßigerweise dazu vorgesehen, den Schichtträger in einer Übertragungsposition anzuordnen, in der sich die jeweilige Schicht auf eine an dem Werkstück vorgesehene Stelle übertragen lässt.

In einer Ausgestaltung der Erfindung umfasst die Übertragungseinrichtung eine Positionierungseinheit, die einen Sensor aufweist, mittels dessen sich die Position des Schichtträgers und/oder der zu übertragenden Schicht ermitteln lässt, und die dazu eingerichtet ist, anhand von durch den Sensor erhaltener Information den Schichtträger bzw. die Schicht in der jeweiligen Übertragungsposition anzuordnen. Während es vorstellbar wäre, den Sensor derart vorzusehen, dass er mit auf den Schichtträger aufgebrachten elektrisch leitenden oder magnetischen Stoffen zusammenwirkt, ist er in der bevorzugten Ausgestaltung der Erfindung durch eine Kamera gebildet, die zumindest einen Bereich erfasst, in dem die Schichten auf das Werkstück übertragen werden. Die jeweilige Position der Schicht bzw. des Schichtträgers wird zweckmäßigerweise mittels eines Computers mit der auf dem Werkstück vorgesehenen Stelle, an der die Schicht aufgebracht werden soll, verglichen und der Schichtträger, sofern nötig, in die Übertragungsposition bewegt.

Alternativ oder ergänzend dazu kann der Schichtträger mit zumindest einer mittels des Sensors erkennbaren Markierung versehen werden, anhand der er in der jeweiligen Übertragungsposition angeordnet werden kann.

In einer Ausgestaltung der Erfindung werden auf dem Schichtträger in Richtung einer Bewegung des Schichtträgers im Verhältnis zu dem Werkstück hintereinander mehrere der Schichten angeordnet, die beim Aufbau des Werkstücks zur Anordnung übereinander vorgesehen sind. Zur Übertragung der jeweiligen Schicht wird der Schichtträger nach und nach in die Übertragungsposition für die Schicht bewegt.

In einer besonders bevorzugten Ausführungsform der Erfindung werden simultan mehrere der Werkstücke aufgebaut, wobei gleichzeitig mehrere der vorgebildeten Schichten auf verschiedene der Werkstücke übertragen werden. Vorteilhaft können in einem einzigen Arbeitsgang eine Vielzahl der Werkstücke aufgebaut werden. Die zu bildenden Werkstücke können gleichartig oder unterschiedlich sein. Vorzugsweise weisen sie dieselbe Form, Struktur, Farbe und das Material bzw. dieselben Materialien oder verschiedene Formen, Strukturen, Farben und/oder Materialien auf.

Zweckmäßigerweise werden gleichzeitig Schichten übertragen, die zur Anordnung in der gleichen Lage in den jeweiligen Werkstücken vorgesehen sind. Es versteht sich, dass die verschiedenen Werkstücke gleichzeitig auf einem einzigen Trägerkörper angeordnet und/oder mittels eines einzigen Stempels miteinander verbunden werden können.

In einer weiteren Ausgestaltung der Erfindung wird die Schicht vor ihrer Übertragung mittels eines Druckverfahrens auf dem Schichtträger gebildet. Als besonders geeignet dafür sind xerografischer Druckverfahren. Jede der Schichten oder, wenn mehrere der Schichten hinter- und/oder nebeneinander auf dem Schichtträger aufzubringen sind, die Vielzahl der Schichten wird bzw. werden dabei vorzugsweise anhand eines digitalisierten Druckbilds, das eine Struktur der jeweilig zu erstellenden Schicht bzw. der zu erstellenden Schichten vorgibt, erzeugt.

Da sich mittels des Druckverfahrens und einer dafür vorgesehenen Schichtbildungseinrichtung, insbesondere einer Druckeinrichtung, vorzugsweise einem elektrofotografischen Druckgerät, auch die Schichten in großen Frequenzen auf dem Schichtträger bilden lassen, lässt sich die Dauer für die gesamte Herstellung des Werkstücks im Vergleich zu den obengenannten Verfahren wesentlich verringern.

Das Druckverfahren umfasst zweckmäßigerweise die Schritte der Erzeugung eines elektrischen latenten Bildes bzw. Ladungsbildes auf einem lichtempfindlichen Aufzeichnungsmaterial, das im allgemeinen ein fotoleitfähiges Material enthält; der darauffolgenden Entwicklung des latenten Bildes bzw. des Ladungsbildes mit einem Schichtbildungsmaterial; der Übertragung des erhaltenen Bildes auf den Schichtträger und des Fixierens des Schichtbildungsmaterials z.B. unter Anwendung von Wärme, Druck oder Lösungsmitteldampf zur Ausbildung der Schicht. Zum Sichtbarmachen von elektrischen latenten Bildern bzw. Ladungsbildern sind verschiedene Entwicklungsverfahren bekannt, beispielsweise das Magnetbürstenverfahren, das Kaskadenentwicklungsverfahren, das Pelzbürstenverfahren, das Pulverwolkenverfahren, das Kontaktentwicklungsverfahren, das Übersprungentwicklungsverfahren und das Magnet-Dry-Verfahren.

Für die Durchführung des elektrofotografischen Druckverfahrens erweist sich ein Laserdrucker als sehr vorteilhaft. Die Schicht kann mit einer Auflösung von bis zu 5000 dpi gedruckt werden. Es hat sich als günstig erwiesen, die Laserleistung, die Entladungskorona, das Kontrastpotential und einen Auftrag des Schichtbildungsmittels möglichst hoch einzustellen. Die optimalen Verfahrensbedingungen können, in Abhängigkeit von der jeweilig eingesetzten Druckeinrichtung, durch einfache Versuche optimiert werden.

Allerdings wäre auch vorstellbar, die Schicht mittels eines Inkjetdruckers aufzubringen.

Zweckmäßigerweise wird die Schicht in einer Dicke ≥ 0,001 mm, vorzugsweise ≥ 0,01 mm, gebildet und auf das Werkstück übertragen. Vorteilhaft kann dann auch in der Richtung, in der das Werkstück aufgebaut wird, eine verhältnismäßig große Auflösung erreicht werden. Die Schicht wird jedoch besonders bevorzugt in einer Dicke zwischen 0,01 und 0,1 mm gedruckt. Um das Werkstücks möglichst schnell aufbauen zu können, könnte die Schicht auch in einer verhältnismäßig großen Dicke auf den Schichtträger aufgebracht werden, z.B. in einer Dicke von maximal 0,1 mm - 3 mm, vorzugsweise maximal 1 mm - 2 mm.

Während es vorstellbar wäre, die Bildung der Schichten auf dem Schichtträger und der Aufbau des Werkstücks aus den Schichten räumlich und zeitlich voneinander zu trennen, um den mit den Schichten versehenen Schichtträger z.B. transportieren oder zwischenlagern zu können, wird die Herstellung der Schichten und deren Übertragung auf das Werkstück in der bevorzugten Ausführungsform der Erfindung in einem einzigen Arbeitsgang durchgeführt. Dafür ist die Vorrichtung zweckmäßigerweise dazu eingerichtet, den Schichtträger, unmittelbar nachdem er mit der Schicht versehen worden ist, zu der Übertragungseinrichtung zu bewegen.

Zweckmäßigerweise ist der Schichtträger derart vorgesehen, dass die Schichten, insbesondere auch bei Bewegung des Schichtträgers, an ihm haften, sich aber beim Aufbau des Werkstücks vollständig von ihnen ablösen lassen. Als besonders vorteilhaft zur Handhabung hat es sich erwiesen, einen flexiblen Schichtträger zu verwenden.

Der Schichtträger ist vorzugsweise bahnenförmig ausgebildet und ggf. zur Anordnung auf einer Rolle vorgesehen. Werden auf dem Schichtträger mehrere der Schichten angeordnet, ist in einer Ausführungsform der Erfindung vorgesehen, den Schichtträger zusammen mit den darauf angeordneten Schichten aufzurollen, damit er einfach gelagert oder/und transportiert werden kann.

Ferner könnte der Schichtträger als eine Mehrzahl von Einzelblättern vorgesehen sein, die sich im bedruckten Zustand vorzugsweise stapeln lassen. Zur Übertragung der jeweiligen Schicht oder Schichten auf das Werkstück könnten die Einzelblätter, vorzugsweise mittels einer Einrichtung zur Ausgabe einzelner der Einzelblätter, von einem Stapel aus den Einzelblättern zur Übertragungseinrichtung transportiert werden.

In einer weiteren Ausführungsform der Erfindung ist der Schichtträger als Endlosband, d.h. als geschlossener Ring, ausgebildet und die Schicht wird nach und nach bei der Übertragung immer wieder von neuem auf ihm aufgebracht und wieder von ihm abgelöst. Es versteht sich, dass das Endlosband umlaufend an der Schichtbildungseinrichtung vorbei bewegt wird, damit es mit der Schicht versehen werden kann, und in Bewegungsrichtung des Endlosbandes dahinter an dem Werkstück vorbei bewegt wird, damit die Schicht auf das Werkstück übertragen werden kann.

Der Schichtträger wird vorzugsweise durch eine Folie oder ein Papier, insbesondere Silikonpapier, Wachspapier oder mit Polytetrafluorethylen beschichtetes (teflonbeschichtetes) Papier, gebildet. Da Folie und Papier flexibel sind und sich, sofern sie in Bahnen ausgebildet sind, aufrollen lassen, eignen sie sich für das Verfahren besonders gut.

In einer Ausführungsform der Erfindung wird die Schicht aus Kunststoff, Keramik, Glas, Metalloxid und/oder Metall und ggf. einem Trägermaterial dafür und/oder, ggf. als Stützmaterial, Wachs, gebildet, wobei sie verschiedene Materialien oder Materialkombinationen aufweisen kann.

Wie bereits angesprochen, könnte die Schicht elektrisch ladbar und/oder magnetisiert oder magnetisierbar ausgebildet sein.

Der Kunststoff, die Keramik, das Glas, das Metalloxid und/oder das Metall liegen zweckmäßigerweise als Partikel vor. Die Partikel werden in einer Ausführungsform der Erfindung zu einem Schichtbildungsmittel verarbeitet, das die Partikel und das Trägermaterial, vorzugsweise ein Bindemittelharz, umfasst. Das Schichtbildungsmittel umfasst zweckmäßigerweise feine Teilchen, die jeweils das Trägermaterial und die Partikel aufweisen, die in dem Trägermittel dispergiert sind. Die Teilchen weisen vorzugsweise einen Durchmesser von 1 bis 100 µm auf, wobei eine durchschnittliche Teilchengröße von 5 bis 30 µm besonders bevorzugt ist. Der Anteil der Partikel in dem Schichtbildungsmittel beträgt zweckmäßigerweise 10 bis 70 Gew.%.

Das Schichtbildungsmittel wird vorzugsweise hergestellt, indem man die Partikel und das Trägermaterial innig vermischt, die erhaltene Mischung in der Schmelze knetet, abkühlt, mahlt, vorzugsweise pulverisiert, und zu der gewünschten Teilchengröße klassiert.

Das Trägermittel ist vorzugsweise derart vorgesehen, dass es bei einer späteren Wärmebehandlung rückstandslos verbrennt, und in seiner Elastizität so eingestellt, das es die gewünschte Menge an Partikeln aufnehmen kann und vorzugsweise beim Mahlen (Pulverisieren) der Mischung nicht bricht.

Das Bindemittelharz ist vorzugsweise aus Vinylmonomeren aufgebaut. Spezielle Beispiele für Vinylmonomere beinhalten: Styrol und dessen Derivate, wie z.B. Styrol, ortho-Methylstyrol, metha-Methylstyrol, para-Methylstyrol, para-Methoxystyrol und para-Ethylstyrol; Methacrylsäureester, wie Methylmethacrylat, Ethylmethacrylat, Propylmethacrylat, n-Butylmethacrylat, Isobutylmethacrylat, n-Octylmethacrylat, Dodecylmethacrylat, 2-Ethylhexylmethacrylat, Stearylmethacrylat, Phenylmethacrylat, Dimethylaminoethylmethacrylat und Diethylaminoethylmethacrylat; Acrylsäureester, wie z.B. Methylacrylat, Ethylacrylat, n-Butylacrylat, Isobutylacrylat, Propylacrylat, n-Octylacrylat, Dodecylacrylat, 2-Ethylhexylacrylat, Stearylacrylat, 2-Chloroethylacrylat und Phenylacrylat; Derivate von Acrylsäure und Methacrylsäure, wie Acrylnitril, Methacrylnitril und Acrylamid. Weitere Beispiele sind durch Dicarbonsäuren mit einer Doppelbindung und deren Derivate, wie z.B. Maleinsäure, Monobutylmaleat, Dibutylmaleat, Monomethylmaleat und Dimethylmaleat; Vinylester, wie z.B. Vinylchlorid, Vinylacetat und Vinylbenzoat; Vinylketone, wie z.B. Vinylmethylketon oder Vinylethylketon; und Vinylether, wie z.B. Vinylmethylether, Vinylethylether und Vinylisobutylether, gegeben. Diese Monomere können entweder einzeln oder in einer Mischung von zwei oder mehreren (co) polymerisiert werden. Hierbei ist es besonders bevorzugt, Styrol oder seine Derivate alleine oder in Kombination mit anderen der obigen Monomere oder Esterderivate zu verwenden. Weiterhin können auch Polyurethane, Polyamide, Epoxyharze, Terpenharze, phenolische Harze, aliphatische oder alizyklische Kohlenwasserstoffharze, aromatische Petroleumharze, chlorierte Paraffine und Paraffinwachse geeignet sein. Auch können mehrere der obigen Bindemittelharze in Kombination eingesetzt werden.

In einer Ausgestaltung der Erfindung weist das Schichtbildungsmittel ein, vorzugsweise elektrostatisch aufgeladenes oder aufladbares, Ladungssteuerungsmittel, um die Schicht für das elektrofotografische Druckverfahren mit einer elektrostatischen Ladung zu versehen, und/oder ein Mittel zur Verbesserung der Fließfähigkeit auf. Die Ladungssteuerungsmittel können durch Ruß, Eisenschwarz, Graphit, Nikrosin, Metallkomplexe von Monoazofarbstoffen, Hansagelb, Benzidingelb, Zink-Atome und/oder verschiedene Lackpigmente gebildet sein. Die Fließfähigkeit kann z.B. durch hydrophobes, kolloidales Siliciumdioxid verbessert werden. Die letztgenannten Mittel sind vorzugsweise in einer Menge von 0,05 bis 5 Gew.%, und insbesondere bevorzugt von 0,1 bis 2 Gew.%, in dem Schichtbildungsmittel enthalten. Damit werden kann
Ferner könnte das Schichtbildungsmittel magnetische Teilchen, wie z.B. Eisen, Mangan, Nickel, Kobalt und Chrom, Magnetit, Hematit, verschiedene Ferrite, Manganlegierungen und andere ferromagnetische Legierungen, enthalten. Außerdem wäre vorstellbar, dass das Schichtbildungsmittel zusätzlich Trägerteilchen enthält, z.B. Eisenpulver oder Glasperlen.

In einer Ausgestaltung der Erfindung wird zumindest eine der Schichten aus mehreren, vorzugsweise unterschiedliche Materialien aufweisende, Teilschichten gebildet, die zur Bildung der Schicht nacheinander auf dem Trägerelement angeordnet werden. Zweckmäßigerweise werden die Teilschichten über- und/oder nebeneinander gebildet, sodass sich auch innerhalb der auf dem Trägerelement anzuordnenden Schicht zwei- oder dreidimensionale Strukturen aufbauen lassen.

Die genannte Druckeinrichtung weist dazu zweckmäßigerweise zumindest zwei Drucktrommeln auf, mittels derer sich je eines der Materialien auf dem Schichtträger bzw. bei Aufbau der Schicht auf einer der bereits aufgebrachten Teilschichten anordnen lässt.

In einer Ausführungsform der Erfindung wird zumindest eine der Teilschichten oder eine der Schichten durch ein Stützmaterial gebildet, das dazu vorgesehen ist, vollständig aus dem Werkstück herausgetrennt, vorzugsweise herausgeschmolzen, zu werden. Das Stützmaterial, das vorzugsweise aus, insbesondere natürlichem oder synthetischem, Wachs gebildet ist, kann zur Ausbildung bestimmter Werkstückgeometrien, beispielsweise von Hohlräumen, Wölbungen oder Hinterschneidungen, notwendig sein, um sicherzustellen, dass das Werkstück ausreichend stabil ist, und werden nach dem Aufbau aus Werkstück entfernt.

In einer weiteren Ausgestaltung der Erfindung weist die Vorrichtung eine Einrichtung zur Erzeugung von Ultraschall und/oder eine Erwärmungseinrichtung auf, die vorzugsweise einen Laser und/oder eine Infrarotlampe umfasst. Mittels der Erwärmungseinrichtung kann zum einen die Ablösung der Schicht von dem Schichtträger unterstützt werden, zum anderen können die Schicht oder/und das Werkstück zu ihrer gegenseitigen Verbindung erwärmt werden.

In einer Ausführungsform der Erfindung wird auf die Schicht, nachdem sie auf das Werkstück übertragen worden ist, ein Mittel zum Lösen des Trägermaterials aufgebracht, vorzugsweise gesprüht. Das Lösungsmittel wird zweckmäßigerweise derart aufgebracht, dass es das Trägermaterial der Schicht und in dem Bereich des Werkstücks, auf dem die Schicht aufgebracht worden ist, das Trägermaterial des Werkstücks anlöst, sodass sich die Schicht unter Vernetzung der Trägermaterialien von Schicht und Werkstück miteinander verbinden. Vorteilhaft ist es bei Aufbringung des Lösemittels nicht notwendig, die Schicht zu ihrer Verbindung mit dem Werkstück zu erwärmen oder/und Druck auszuüben. Als Lösungsmittel kommen beispielsweise Wasser oder Toluol in Betracht.

Zweckmäßigerweise werden die Schichten mit einer Klebeschicht, mittels derer sie miteinander verbindbar sind, versehen, wobei die Klebeschicht durch die letzte auf der Schicht aufzubringende Teilschicht gebildet sein kann.

In einer Ausführungsform der Erfindung wird zumindest eine der Teilschichten oder eine der Schichten durch ein Stützmaterial gebildet, das dazu vorgesehen ist, vollständig aus dem Werkstück herausgetrennt, vorzugsweise herausgeschmolzen, zu werden. Das Stützmaterial, das vorzugsweise aus, vorzugsweise natürlichem oder synthetischem, Wachs gebildet ist, kann zur Ausbildung bestimmter Werkstückgeometrien, beispielsweise von Hohlräumen, Wölbungen oder Hinterschneidungen, notwendig sein, um sicherzustellen, dass das Werkstück ausreichend stabil ist, und werden nach dem Aufbau aus Werkstück entfernt.

In einer weiteren Ausgestaltung der Erfindung wird jede der Schichten einzeln oder mehrere der Schichten gemeinsam, nachdem sie auf das Werkstück aufgebracht worden ist bzw. sind, erwärmt, um sie mit dem Werkstück ggf. untereinander zu verbinden. Vorteilhaft kann die Schicht bzw. können die Schichten dann direkt lagenweise ausgehärtet oder gesintert werden und ggf. das Stützmaterial aus dem Werkstück getrennt werden. Eine dafür vorgesehene Erhitzungseinrichtung umfasst zweckmäßigerweise einen Laser, vorzugsweise eine Laserdiode, und ist dazu eingerichtet, die jeweilige Schicht bzw. die jeweiligen Schichten gleichmäßig, oder falls notwendig, gezielt mit unterschiedlichen Temperaturen zu erwärmen. Bei der Erwärmung können das Trägermaterial und/oder das Stützmaterial entfernt werden. Die Erwärmung wird abhängig von dem jeweiligen Material in der Schicht bzw. den Schichten, für Keramik, Glas, Metalloxid und/oder Metall, einer Temperatur im Bereich von 600 bis 1500 °C, für Kunststoff im Bereich von 150 bis 600 °C durchgeführt.

Abhängig von dem Material bzw. den Materialen, aus denen das Werkstück aufgebaut wird, kann es, insbesondere wenn die Schichten zuvor nicht zu ihrer Verbindung erhitzt worden sind, zweckmäßig sein, das Werkstück nach Anordnung sämtlicher der Schichten zur Verbindung der Schichten untereinander und insbesondere zur Verbindung der einzelnen Partikel zu einem einteiligen, das Werkstück bildenden Körper, wärmezubehandeln, insbesondere zu sintern.

Bei einer solchen Wärmebehandlung können auch das Trägermaterial und/oder das Stützmaterial entfernt werden. Die Wärmebehandlung erfolgt abhängig von dem jeweilig verwendeten Material, für Keramik, Glas, Metalloxid und/oder Metall, bei einer Temperatur im Bereich von 600 bis 1500 °C, für Kunststoff im Bereich von 150 bis 600 °C.

Es versteht sich, dass die Ausbildung der Schicht auf dem Schichtträger und die Übertragung der Schicht auf das Werkstück computergesteuert erfolgt, wobei vorzugsweise auf einen Datensatz zurückgegriffen wird, der Formen und Maße des aufzubauenden Werkstücks umfasst. Ein solcher Datensatz ist typischerweise eine CAD-Datei oder dergleichen.

Die Vorrichtung umfasst zu ihrer Steuerung und/oder Regelung in einer Ausgestaltung der Erfindung eine Steuerungs- und/oder Regelungseinrichtung, mittels derer sich die Ausbildung der Schicht auf dem Schichtträger, insbesondere die Ausbildung der Teilschichten und die entsprechende Materialauswahl, und/oder die Übertragung der Schicht auf das Werkstück, insbesondere die Übertragungseinrichtung einschließlich der Bewegung des Schichtträgers, der Stempels und/oder des Werkstückträgers, die Erwärmungseinrichtung und/oder die Einrichtung zur Erzeugung von Ultraschall, steuern und/oder regeln lässt.

In einer Ausführungsform der Erfindung ist die Steuerungs- und/oder Regelungseinrichtung dazu vorgesehen, aus dem genannten Datensatz die zu erzeugende Form der Schicht bzw. der Teilschichten zu bestimmen und/oder das zu verwendende Material zu ermitteln, die Vorrichtung dementsprechend zur Durchführung des Verfahrens einzurichten und ggf. das Verfahren durchzuführen.

Die Erfindung wird nachfolgend anhand von Ausführungsbeispielen und der beiliegenden Zeichnungen, die sich auf die Ausführungsbeispiele beziehen, näher erläutert. Es zeigen schematisch
- Fig. 1: eine erfindungsgemäße Vorrichtung,
- Fig. 2: in Seitenansicht Details von mittels der Vorrichtung nach Fig. 1 herstellbaren Schichten,
- Fig. 3: in Draufsicht Details von mittels der Vorrichtung nach Fig. 1 herstellbaren Schichten,
- Fig. 4: eine weitere erfindungsgemäße Vorrichtung,
- Fig. 5: eine Draufsicht auf einen bedruckten Schichtträger, und
- Fig. 6: eine weitere erfindungsgemäße Vorrichtung.

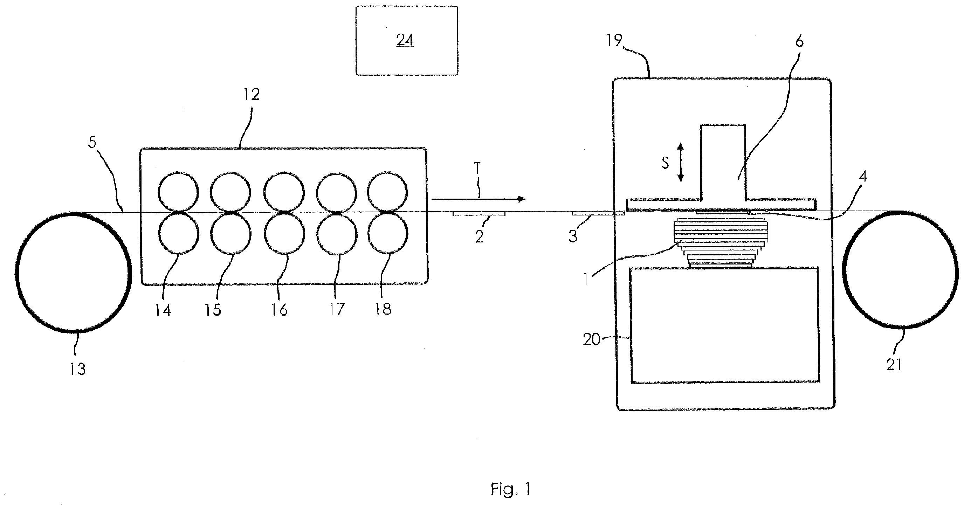

Eine in Fig. 1 gezeigte erfindungsgemäße Vorrichtung umfasst eine xerografische Druckeinrichtung 12, das dazu eingerichtet ist, einen Schichtträger 5, der durch eine Papierbahn gebildet ist, mit Schichten 2,3,4 zu bedrucken. Sie weist ferner eine Übertragungseinrichtung 19, mittels derer sich die Schichten 2,3,4 von dem Schichtträger 5 auf ein Werkstück 1 übertragen lassen, und eine Steuerungs- und/oder Regelungseinrichtung 24 zur Steuerung und/oder Regelung der Druckeinrichtung 12 und der Übertragungseinrichtung 19.

Die Druckeinrichtung 12 umfasst eine Halterung für eine Rolle 13, auf der der Schichtträger 5 aufgerollt ist, sowie fünf, mit einer lichtempfindlichen Beschichtung versehene Drucktrommeln 14,15,16,17,18 , die zum Drucken unterschiedlicher Materialien eingerichtet sind.

Die Übertragungseinrichtung 19 weist einen Trägerkörper 20, auf dem das Werkstück 1 angeordnet und aufgebaut wird, und einen Stempel 6 auf, mittels dessen zunächst eine erste Schicht des Werkstücks 1 auf dem Trägerkörper 20 angeordnet wird und anschließend weitere der Schichten 2,3,4 an das Werkstück 1, das sich im Aufbau befindet, angelegt werden. Der Stempel 6 ist in Richtungen des Doppelpfeils S bewegbar, um die Schicht 2,3,4 zur Übertragung an dem Trägerkörper 20 bzw. das Werkstück 1 anzulegen und anschließend unter Ablösung des Schichtträgers 5 von der Schicht 2,3,4 des Werkstücks 1 wieder freizugeben.

Die Übertragungseinrichtung 19 umfasst ferner eine hier nicht gezeigte Einrichtung zur Erzeugung von Ultraschall, mittels derer Ultraschall auf den Stempel gerichtet werden kann, um bei der Übertragung der jeweiligen Schicht 2,3,4 die Ablösung der Schicht 2,3,4 vom Schichtträger 5 zu unterstützen.

Außerdem ist die Übertragungseinrichtung 19 mit einem hier nicht gezeigten Laser versehen, mittels dessen sich kurz vor der Übertragung die Schicht 2,3,4 und/oder das Werkstück 1 in einem Bereich, auf den die Schicht 2,3,4 aufgebracht werden soll, erwärmen lässt, um die Schicht 2,3,4 mit dem Werkstück 1 zu verbinden.

Um den Schichtträger 5 ausreichend genau gegenüber dem Werkstück 1 in jeweiligen Übertragungspositionen anordnen zu können, in denen die Schichten 2,3,4 auf das Werkstück übertragen werden können, weist die Übertragungseinrichtung 19 ferner eine hier nicht gezeigte Kamera auf, die dem Bereich, in dem das Werkstück 1 mit den Schichten 2,3,4 belegt wird, erfasst und die zur Datenübertragung mit der Steuerungs- und/oder Regelungseinrichtung 24 verbunden ist.

In Vorschubrichtung T des Schichtträgers 5 gesehen hinter der Übertragungseinrichtung 19 ist eine weitere Halterung für eine Rolle 21 vorgesehen, auf die sich der Schichtträger 5 aufrollen lässt, nachdem die Schichten 2,3,4 auf das Werkstück 1 übertragen worden sind.

Die Halterungen für die Rollen 13 und 21 sind jeweils mit einem Motor zur Bewegung des Schichtträgers 5 versehen. Die Motoren sind durch die Steuerungs- und/oder Regelungseinrichtung 24 steuer- und/oder regelbar, um die Position des Schichtträgers 5 gegenüber dem Werkstück 1 oder dem Trägerkörper 20 einzustellen. Der Schichtträger 5 kann dazu in der Vorschubrichtung T und ggf. senkrecht dazu bewegbar sein.

Die Steuerungs- und/oder Regelungseinrichtung 24 umfasst einen Computer, der dazu eingerichtet ist, aus CAD-Dateien, die die Form des zu erzeugenden Werkstücks 1 beschreiben, Informationen zu erzeugen, anhand derer sich die Formen der Schichten 2,3,4 und die zu deren Ausbildung zu verwendenden Materialien bestimmen lassen. Aus den Informationen erzeugt der Computer Druckbilder, anhand derer die xerografische Druckeinrichtung 12 gesteuert werden kann, und ermittelt Übertragungspositionen für die Anordnung der Schichten 2,3,4 bei der Übertragung auf das Werkstück 1.

Zum Aufbau des Werkstücks 1 wird wie folgt verfahren.

Zunächst wird in den Computer 1 eine CAD-Datei geladen, die Informationen über die Form des Werkstücks 1 enthält und daraus die Druckbilder für die Druckeinrichtung 12 erzeugt.

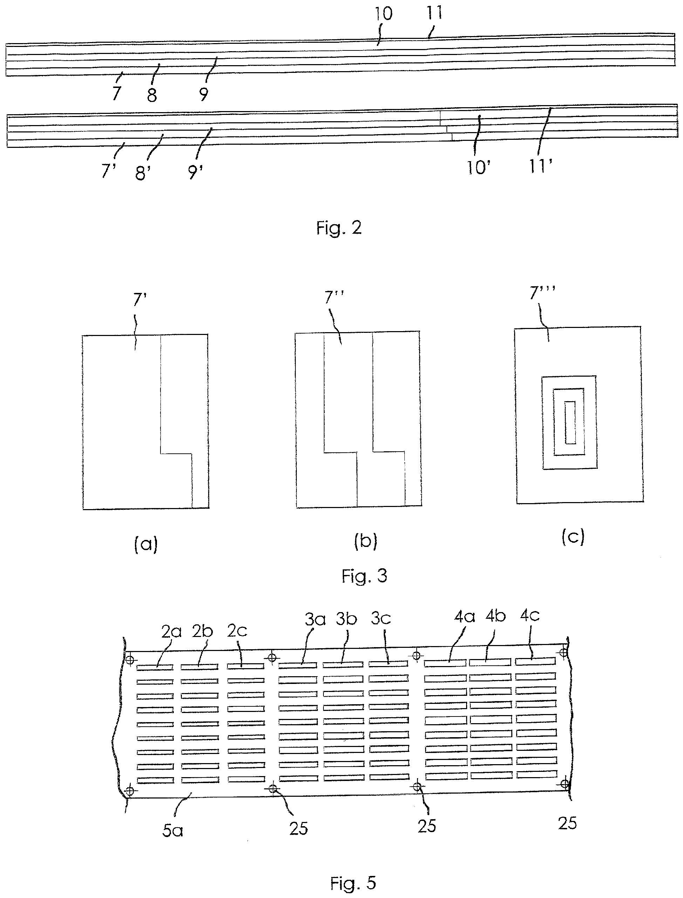

Anhand der Informationen richtet die Steuerungs- und/oder Regelungseinrichtung 24 die Druckeinrichtung 12 ein und veranlasst, dass der Schichtträger 5 mittels der Schrittmotoren in Bewegung gesetzt wird. Von der Rolle 13 wird der Schichtträger 5 nun durch die Druckeinrichtung 12 hindurchgeführt und dabei mittels der Drucktrommeln 14,15,16,17,18 Teilschichten 7,8,9,10,11 gebildet, aus denen die Schichten 2,3,4 aufgebaut werden (vgl. Fig. 2 und 3).

Beispielsweise kann die Drucktrommel 14 zum Drucken einer Teilschicht 7 aus einem Thermoplast, die Drucktrommel 15 zum Drucken einer Teilschicht 8 aus Metall, die Drucktrommel 16 zum Drucken einer Teilschicht 9 aus Keramik, die Drucktrommel 17 zum Drucken einer Teilschicht 10 aus einem Duroplast und die Drucktrommel 18 zum Drucken einer Klebeschicht 11 vorgesehen sein, wobei anzumerken ist, dass die Teilschichten 7,8,9,10,11 ein Trägermaterial enthalten können, um die verschiedenen, ggf. pulverförmigen, Materialien fließfähig zu machen.

Eine entsprechend aufgebaute Schicht zeigt Fig. 2a in einer Seitenansicht. Wie in Fig. 2b in einer Seitenansicht und in Fig. 3 in einer Draufsicht dargestellt ist, könnten Teilschichten 7',8',9',10' auch in einer Ebene unterteilt werden und in der Ebene verschiedene Materialien aufweisen. In den Fig. 3a, 3b und 3c soll lediglich beispielhaft anhand von Teilschichten 7',7",7" gezeigt werden, dass in den jeweiligen Teilschichtebenen verschiedene Muster ausgebildet werden können, um im Werkstück 1 eine dreidimensionale Struktur zu erzeugen. Einzelne der Teilschichten könnten auch aus einem Stützmaterial gebildet sein, das lediglich zur Stabilisierung des Werkstücks 1 während dessen Aufbau dient und später entfernt wird.

Nach dem Drucken werden die Schichten 2,3,4 mit dem Schichtträger 5 in die Übertragungseinrichtung 19 bewegt. Sobald eine der Schichten 2 auf das Werkstück 1 zu übertragen ist, erfasst die Kamera die Position der Schicht 2 und übermittelt diese an die Steuerungs- und/oder Regelungseinrichtung 24, welche den Schichtträger 5 mittels der Motoren in die jeweilig vorgesehene Übertragungsposition bewegt. Sobald die Schicht 2 in der Übertragungsposition ist, wird die Klebeschicht (Teilschicht 11) mittels des Lasers erwärmt und der Stempel 6 in Richtung zum Werkstück 1 hin bewegt, um die Schicht 2 gegen das Werkstück 1 zu drücken und mit dem Werkstück 1 zu verbinden.

Nach vollständigem Aufbau des Werkstücks 1 wird es aus der Übertragungseinrichtung 19 genommen und zur Fertigstellung eines Erzeugnisse gesintert, wobei das Trägermaterial und die Stützmaterialien aus dem Werkstück 1 entfernt werden und sich die verschiedenen Schichten 2,3,4 und Teilschichten 7,8,9,10 weiter miteinander verbinden.

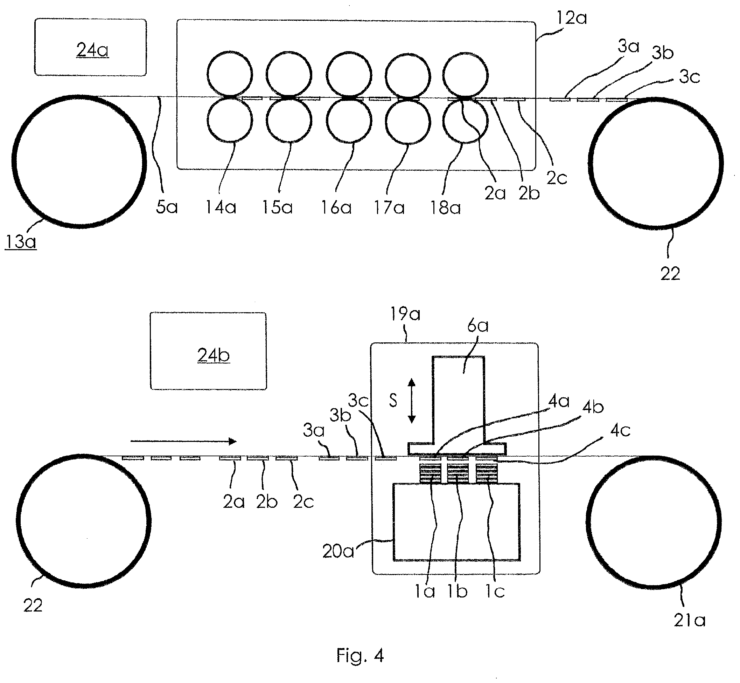

Nachfolgend wird auf die Fig. 4 bis 6 Bezug genommen, in der gleiche oder gleichwirkende Teile mit derselben Bezugszahl wie in Fig. 1 und 2 bezeichnet sind und der betreffenden Bezugszahl jeweils ein Buchstabe beigefügt ist.

Eine weitere, in Fig. 4 gezeigte erfindungsgemäße Vorrichtung unterscheidet sich von derjenigen nach Fig. 1 dadurch, dass eine Druckeinrichtung 12a und eine Übertragungseinrichtung 19a räumlich getrennt voneinander angeordnet sind.

Ein Schichtträger 5a wird nach Bedruckung mit Schichten 2a,2b,2c,3a, 3b,3c,4a, 4b,4c auf eine Rolle 22 aufgerollt. Die nun mit dem bedruckten Schichtträger 5a versehene Rolle 22 kann nun zwischengelagert und transportiert werden und wird, um ein Werkstück 1a,1b,1c aufzubauen, auf eine Halterung der Übertragungseinrichtung 19a gesetzt, von welcher aus der Schichtträger 5a wie oben beschrieben zum Werkstückaufbau zu dem Trägerkörper 20a und dem Stempel 6a geführt werden kann.

Die Fig. 4 und 5 veranschaulichen ferner, wie mittels des erfindungsgemäßen Verfahrens gleichzeitig mehrere Werkstücke 1a,1b,1c aufgebaut werden können.

Mittels Drucktrommeln 14a,15a,16a,17a,18a werden gleichzeitig mehrere, in Fig. 5 in Draufsicht gezeigte Gruppen von Schichten 2a,2b,2c,3a,3b,3c,4a,4b,4c gebildet, die gruppenweise dieselbe Form und Struktur aufweisen. Die Schichten 2a,2b,2c,3a,3b,3c,4a,4b,4c werden anschließend wie oben erläutert mittels eines Stempels 6a auf einem Trägerkörper 20a simultan zu den form- und strukturgleichen Werkstücken 1a,1b,1c aufgebaut.

Es versteht sich, dass bei entsprechender Steuerung und/oder Regelung simultan auch Werkstücke aufgebaut werden können, die sich in ihrer Form und/oder Struktur voneinander unterscheiden.

Fig. 5 zeigt außerdem Markierungen 25, die beim Bedrucken auf dem Schichtträger 5 aufgebracht werden und durch eine hier nicht gezeigte Kamera erfasst werden, um den Schichtträger 5a durch entsprechende, durch eine Steuerungs- und/oder Regelungseinrichtung 24b gesteuerte Bewegung in eine Übertragungsposition zu bringen.

In einem weiteren Ausführungsbeispiel werden die Schichten 2,3,4 oder 2a,2b,2c,3a,3b,3c,4a,4b,4c wenn sie auf dem Schichtträger 5,5a angeordnet sind, elektrisch geladen und das Werkstück 1 oder die Werkstücke 1a,1b,1c mit einer entgegengesetzten Ladung zu den Schichten 2,3,4 oder
2a,2b,2c,3a,3b,3c,4a,4b,4c versehen werden, sodass die Schichten 2,3,4 oder 2a,2b,2c,3a,3b,3c,4a,4b,4c, wenn sie zu dem Werkstück 1 oder zu den Werkstücken 1a,1b,1c bewegt werden, von dem Werkstück 1 oder den Werkstücken 1a,1b,1c angezogen und sich aufgrund der elektrischen Anziehungskräfte an dem Werkstück 1 oder den Werkstücken 1a,1b,1c anordnen.

Alternativ oder ergänzend dazu könnte der Stempel 6,6a derart geladen werden, dass durch elektrostatische Abstoßung eine Anordnung der Schichten 2,3,4 oder 2a,2b,2c,3a,3b,3c,4a,4b,4c auf dem Werkstück 1 oder den Werkstücken 1a,1b,1c unterstützt wird.

Alternativ oder ergänzend dazu könnten die Schichten 2,3,4 oder 2a,2b,2c,3a,3b, 3c,4a,4b,4c magnetisiert oder magnetisierbar vorgesehen sein und der Trägerkörper 20,20a und/oder das Werkstück 1 oder die Werkstücke 1a,1b,1c derart magnetisiert sein, dass er bzw. sie die Schichten 2,3,4 oder
2a,2b,2c,3a,3b,3c,4a,4b,4c anziehen. Alternativ oder ergänzend dazu könnte der Stempel 6 derart magnetisiert sein, dass er die Schichten 2,3,4 oder
2a,2b,2c,3a,3b,3c,4a,4b,4c abstößt oder mit einem Elektromagneten versehen sein, mit dem ein magnetisches Feld gebildet wird, durch das die Schichten 2,3,4 oder 2a,2b,2c,3a,3b,3c,4a,4b,4c hin zu dem Trägerkörper 20,20a bzw. dem Werkstück 1 oder den Werkstücken 1a,1b,1c bewegt werden. Vorteilhaft kann mit dem Elektromagneten das magnetische Feld punktuell zu den Zeitpunkten erzeugt werden, zu denen sich die jeweilige Schicht 2,3,4 oder 2a,2b,2c, 3a,3b,3c,4a,4b,4c in der Übertragungsposition befindet.

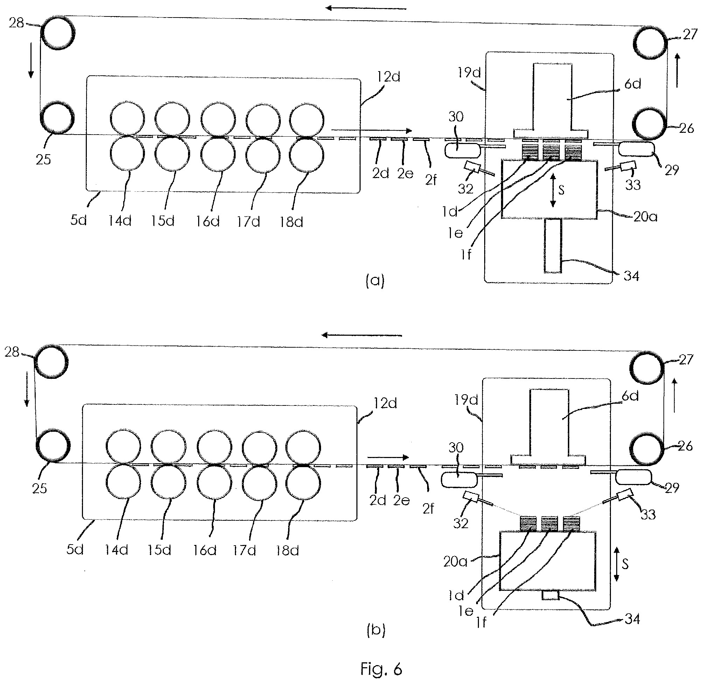

In Fig. 6 ist eine weitere erfindungsgemäße Vorrichtung gezeigt, die sich von denjenigen nach den Fig. 1 und 4 dadurch unterscheidet, dass ein Schichtträger 5d durch ein Endlosband gebildet ist, das über Umlenkrollen 25,26,27,28 durch eine Druckeinrichtung 12d und eine Übertragungseinrichtung 19d bewegt wird. Nach Übertrag von Schichten 2d,2e,2f auf Werkstücke 1d,1e,1f wird die jeweilige Stelle des Schichtträgers 5d, auf der die jeweiligen Schichten 2d,2e,2f angeordnet waren, in Richtung der Pfeile wieder zu der Druckeinrichtung 12d geführt. Der Schichtträger 5d könnte, sofern dies notwendig sein sollte, auf der Strecke zwischen der Übertragungseinrichtung 19d und der Druckeinrichtung 12d mittels einer hier nicht gezeigten Reinigungseinrichtung gereinigt werden.

Die Vorrichtung unterscheidet sich von den Vorrichtungen nach den Fig. 1 und 4 ferner dadurch, dass die Übertragungseinrichtung mit Sprüheinrichtungen 29,30 versehen ist, mittels derer die Werkstücke 1d,1e,1f mit Lösungsmittel, beispielsweise Wasser oder Toluol, zum Anlösen eines Trägermaterials, z.B. Bindemittelharz, der auf die Werkstücke 1d,1e,1f übertragenen Schichten 2d,2e,2f versehen ist. Durch Besprühen der mit jeweils neuen Schichten 2d,2e,2f belegten Werkstücke 1d,1e,1f in den Bereichen, auf denen die neuen Schichten 2d,2e,2f angeordnet sind, wird das Trägermaterial der Schichten 2d,2e,2f und der Werkstücke 1d,1e,1f angelöst, sodass diese jeweils untereinander unter Vernetzung der jeweiligen Trägermaterialien miteinander verbunden werden.

Darüber hinaus weist die Übertragungseinrichtung 19d Laserdioden 32,33 auf, mittels derer sich die auf den Werkstücken 1d,1 e,1f untergeordneten neuen Schichten 2d,2e,2f erhitzen lassen, um die Schichten 2d,2e,2f zusammen mit den Werkstücken 1d,1e,1f auszuhärten oder zu sintern und dabei zu verbinden. Um die Werkstücke 1d,1e,1f in eine passende Position zur Besprühung mit dem Lösemittel und zur Erhitzung durch die Laserdioden 32,33 zu bringen, kann ein Trägerkörper 20a zu seiner Höhenverstellung auf einem höhenverstellbaren Sockel 34 angeordnet sein.

## Patentansprüche

1. Herstellungsverfahren, bei dem ein Werkstück (1) nach und nach schichtweise aufgebaut wird und zum Aufbau des Werkstücks (1) jeweils eine vorgebildete Schicht (2,3,4), die mittels eines elektrofotografischen Druckverfahrens auf einem Schichtträger (5) gebildet wird, von dem Schichtträger (5) auf das Werkstück (1) übertragen wird, wobei der Schichtträger (5) nach Bedruckung mittels des elektrofotografischen Druckverfahrens vollständig auf eine Rolle (22) aufgerollt wird,
**dadurch gekennzeichnet,**
**dass** die Schicht (2,3,4) aus unterschiedlichen Materialien gebildet wird und zumindest eine der Schichten (2,3,4) aus mehreren übereinander angeordneten Teilschichten (7,8,9,10,11) gebildet wird.

2. Verfahren nach Anspruch 1,
**dadurch gekennzeichnet,**
**dass** die Schicht (2,3,4) in einem Druckvorgang auf das Werkstück (1) übertragen wird, wobei vorzugsweise die Schicht (2,3,4), bevorzugt mittels eines Stempels (6), an das Werkstück (1) oder das Werkstück (1) an die Schicht (2,3,4) angelegt wird.

3. Verfahren nach Anspruch 1 oder 2,
**dadurch gekennzeichnet,**
**dass** simultan mehrere der Werkstücke (1a,1b,1c) aufgebaut werden, wobei gleichzeitig mehrere der vorgebildeten Schichten (2a,2b,2c,3a,3b,3c,4a,4b, 4c) auf verschiedene der Werkstücke (1a,1b,1c) übertragen werden.

4. Verfahren nach einem der Ansprüche 1 bis 3,
**dadurch gekennzeichnet,**
**dass** die Schicht (2,3,4) durch Xerografie, vorzugsweise mittels eines Laserdruckers, auf dem Schichtträger (5) gebildet wird.

5. Verfahren nach einem der Ansprüche 1 bis 4,
**dadurch gekennzeichnet,**
**dass** auf dem Schichtträger (5) neben- und/oder hintereinander mehrere der Schichten (2,3,4) angeordnet werden und der Schichtträger (5) zur Übertragung der jeweiligen Schicht (2,3,4) nach und nach in einer Übertragungsposition angeordnet wird, in der sich die jeweilige Schicht (2,3,4) auf das Werkstück (1) übertragen lässt.

6. Verfahren nach einem der Ansprüche 1 bis 5,
**dadurch gekennzeichnet,**
**dass** der Schichtträger (5) durch eine Folie oder ein Papier, insbesondere Silikonpapier, Wachspapier oder polytetrafluorethylenbeschichtetes Papier, gebildet wird.

7. Verfahren nach einem der Ansprüche 1 bis 6,
**dadurch gekennzeichnet,**
**dass** zur Anordnung des Schichtträgers (5) in der jeweiligen Übertragungsposition eine Position des Schichtträgers (5) und/oder der Schicht (2,3,4) mittels eines Sensors, vorzugsweise einer Kamera, ermittelt wird und der Schichtträger (5) vorzugsweise mit zumindest einer Markierung versehen wird, anhand derer er sich seine Position feststellen lässt.

8. Verfahren nach einem der Ansprüche 1 bis 7,
**dadurch gekennzeichnet,**
**dass** die Schicht (2,3,4) unter Erwärmung, vorzugsweise mittels InfrarotStrahlung oder mittels eines Lasers, oder/und unter Einwirkung von elektrischer und/oder magnetischer Anziehungs- oder Abstoßungskraft oder/und von Ultraschall von dem Trägerelement (5) abgelöst werden.

9. Verfahren nach einem der Ansprüche 1 bis 8,
**dadurch gekennzeichnet,**
**dass** die Schicht (2,3,4) aus Keramik, Glas, Kunststoff, Wachs, Metalloxid und/oder Metall und ggf. einem Trägermaterial dafür gebildet wird.

10. Verfahren nach einem der Ansprüche 1 bis 9,
**dadurch gekennzeichnet,**
**dass** die Teilschichten (7,8,9,10,11) nacheinander auf dem Trägerelement (5) angeordnet werden.

11. Verfahren nach einem der Ansprüche 1 bis 10,
**dadurch gekennzeichnet,**
**dass** auf die Schicht (2,3,4), nachdem sie auf das Werkstück (1) übertragen worden ist, ein Mittel zum Lösen eines Trägermaterials der Schicht (2,3,4) gebracht, vorzugsweise gesprüht, wird, wobei das Lösungsmittel vorzugsweise derart aufgebracht wird, dass es das Trägermaterial der Schicht (2,3,4) und in einem Bereich des Werkstücks (1), auf dem die Schicht (2,3,4) aufliegt, das Trägermaterial des Werkstücks (1) anlöst, sodass sich die Schicht (2,3,4) unter Vernetzung der Trägermaterialien der Schicht (2,3,4) und des Werkstücks (1) miteinander verbinden.

12. Verfahren nach einem der Ansprüche 1 bis 11,
**dadurch gekennzeichnet,**
**dass** das Werkstück (1) wärmebehandelt, vorzugsweise gesintert, wird, wobei vorzugsweise das Werkstück (1) als Ganzes oder jede einzelne der Schichten (2,3,4) oder mehrere der Schichten (2,3,4) gemeinsam nach ihrer Anordnung auf dem Werkstück (1), vorzugweise mittels eines Laserstrahls, erhitzt werden.

13. Vorrichtung zum sukzessiven schichtweisen Aufbau eines Werkstücks (1), die eine elektrofotografische Druckeinrichtung (12) zur Bildung (12) einer Schicht (2,3,4) auf einem Schichtträger (5) und eine Einrichtung (19) zur Übertragung der Schicht (2,3,4) von dem Schichtträger (5) auf das Werkstück (1) aufweist, wobei die elektrofotografische Druckeinrichtung (12) dazu vorgesehen ist, den mit der Schicht (2,3,4) bedruckten Schichtträger (5) vollständig auf eine Rolle (22), die zur Benutzung in der Übertragungseinrichtung (19) eingerichtet ist, aufzurollen,
**dadurch gekennzeichnet,**
**dass** Druckeinrichtung (12) dazu vorgesehen ist, die Schicht (2,3,4) aus unterschiedlichen Materialien zu bilden und zumindest eine der Schichten (2,3,4) aus mehreren übereinander angeordneten Teilschichten (7,8,9,10,11) zu bilden.

14. Vorrichtung nach Anspruch 13,
**dadurch gekennzeichnet,**
**dass** die Übertragungseinrichtung (19) dazu eingerichtet ist, die Schicht (2,3,4) mit dem Werkstück (1) zu verbinden und von dem Schichtträger (5) abzulösen, wobei vorzugsweise der Schichtträger (5) zum Werkstück (1) hin oder/und das Werkstück (1) zum Schichtträger (5) hin bewegbar ist.

15. Schichtträger (5) mit Rolle (22), wobei auf dem Schichtträger (5), der vollständig auf die Rolle (22) aufgerollt ist, Schichten (2,3,4) angeordnet sind, welche zum schichtweisen Aufbau eines Werkstücks (1) vorgesehen sind, und die Rolle (22) zur Benutzung in einer Einrichtung (19) zur Übertragung der Schichten (2,3,4) von dem Schichtträger (5) auf ein Werkstück (1) eingerichtet ist, wobei die Schichten (2,3,4) mittels eines elektrofotografischen Druckverfahrens auf den Schichtträger (5) aufgebracht sind,
**dadurch gekennzeichnet,**
**dass** zumindest eine der Schichten (2,3,4) aus unterschiedlichen Materialien gebildet ist und zumindest eine der Schichten (2,3,4) aus mehreren übereinander angeordneten Teilschichten (7,8,9,10,11) gebildet ist.

## Claims

1. Production method in which a workpiece (1) is built up layer by layer in a gradual manner and, for build-up of the workpiece (1), a respective preformed layer (2, 3, 4), which is formed on a layer carrier (5) by means of an electrophotographic printing process, is transferred from the layer carrier (5) to the workpiece (1), wherein the layer carrier (5) is completely rolled onto a roller (22) after printing by means of the electrophotographic printing process,
**characterized**
**in that** the layer (2, 3, 4) is formed from different materials, and at least one of the layers (2, 3, 4) is formed from multiple sub-layers (7, 8, 9, 10, 11) which are arranged one above the other.

2. Method according to Claim 1,
**characterized**
**in that** the layer (2, 3, 4) is transferred to the workpiece (1) in a printing operation, wherein preferably the layer (2, 3, 4), preferably by means of a ram (6), is applied to the workpiece (1) or the workpiece (1) is applied to the layer (2, 3, 4).

3. Method according to Claim 1 or 2,
**characterized**
**in that** multiple ones of the workpieces (1a, 1b, 1c) are built up simultaneously, wherein multiple ones of the preformed layers (2a, 2b, 2c, 3a, 3b, 3c, 4a, 4b, 4c) are transferred to various ones of the workpieces (1a, 1b, 1c) at the same time.

4. Method according to one of Claims 1 to 3,
**characterized**
**in that** the layer (2, 3, 4) is formed on the layer carrier (5) by xerography, preferably by means of a laser printer.

5. Method according to one of Claims 1 to 4,
**characterized**
**in that** multiple ones of the layers (2, 3, 4) are arranged one next to the other and/or one behind the other on the layer carrier (5), and, for transfer of the respective layer (2, 3, 4), the layer carrier (5) is, in a gradual manner, arranged in a transfer position in which the respective layer (2, 3, 4) can be transferred to the workpiece (1).

6. Method according to one of Claims 1 to 5,
**characterized**
**in that** the layer carrier (5) is formed by a film or a paper, in particular silicone paper, wax paper or polytetrafluoroethylene-coated paper.

7. Method according to one of Claims 1 to 6,
**characterized**
**in that**, for arrangement of the layer carrier (5) in the respective transfer position, a position of the layer carrier (5) and/or of the layer (2, 3, 4) is ascertained by means of a sensor, preferably a camera, and the layer carrier (5) is preferably provided with at least one marking, on the basis of which the position thereof can be determined.

8. Method according to one of Claims 1 to 7, **characterized**
**in that** the layer (2, 3, 4) is released from the carrier element (5) while being heated, preferably by means of infrared radiation or by means of a laser, and/or under the action of an electrical and/or magnetic force of attraction or force of repulsion and/or of ultrasound.

9. Method according to one of Claims 1 to 8,
**characterized**
**in that** the layer (2, 3, 4) is formed from ceramic, glass, plastic, wax, metal oxide and/or metal and possibly a carrier material therefor.

10. Method according to one of Claims 1 to 9,
**characterized**
**in that** the sub-layers (7, 8, 9, 10, 11) are arranged one after the other on the carrier element (5).

11. Method according to one of Claims 1 to 10,
**characterized**
**in that** a means for dissolving a carrier material of the layer (2, 3, 4) is applied to, preferably sprayed onto, the layer (2, 3, 4) after the latter has been transferred to the workpiece (1), wherein the solvent is preferably applied in such a way that it dissolves the carrier material of the layer (2, 3, 4), and, in a region of the workpiece (1) on which the layer (2, 3, 4) bears, the carrier material of the workpiece (1), so that the layer (2, 3, 4) is bonded by cross-linking of the carrier materials of the layer (2, 3, 4) and the workpiece (1) with one another.

12. Method according to one of Claims 1 to 11,
**characterized**
**in that** the workpiece (1) is heat-treated, preferably sintered, wherein preferably the workpiece (1), in its entirety, or each individual one of the layers (2, 3, 4), or multiple ones of the layers (2, 3, 4), together, after the arrangement thereof on the workpiece (1), is/are heated, preferably by means of a laser beam.

13. Apparatus for building up a workpiece (1) layer by layer in a successive manner, having an electrophotographic printing device (12) for forming (12) a layer (2, 3, 4) on a layer carrier (5), and having a device (19) for transferring the layer (2, 3, 4) from the layer carrier (5) to the workpiece (1), wherein the electrophotographic printing device (12) is intended for completely rolling the layer carrier (5) printed with the layer (2, 3, 4) onto a roller (22), which is configured for use in the transfer device (19),
**characterized**
**in that** the printing device (12) is intended for forming the layer (2, 3, 4) from different materials and for forming at least one of the layers (2, 3, 4) from multiple sub-layers (7, 8, 9, 10, 11) which are arranged one above the other.

14. Apparatus according to Claim 13,
**characterized**
**in that** the transfer device (19) is configured to bond the layer (2, 3, 4) to the workpiece (1) and to release said layer from the layer carrier (5), wherein preferably the layer carrier (5) is movable towards the workpiece (1) and/or the workpiece (1) is movable towards the layer carrier (5).

15. Layer carrier (5) with roller (22), wherein layers (2, 3, 4) are arranged on the layer carrier (5), which is completely rolled onto the roller (22), and are intended for build-up of a workpiece (1) layer by layer, and the roller (22) is configured for use in a device (19) for transferring the layers (2, 3, 4) from the layer carrier (5) to a workpiece (1), wherein the layers (2, 3, 4) are applied to the layer carrier (5) by means of an electrophotographic printing process,
**characterized**
**in that** at least one of the layers (2, 3, 4) is formed from different materials, and at least one of the layers (2, 3, 4) is formed from multiple sub-layers (7, 8, 9, 10, 11) which are arranged one above the other.

## Revendications

1. Procédé de fabrication, dans lequel une pièce (1) est construite progressivement par couches et, pour la construction de la pièce (1), une couche (2, 3, 4) préformée, qui est formée au moyen d'un procédé d'impression électrophotographique sur un support de couche (5), est à chaque fois transférée à partir du support de couche (5) sur la pièce (1), le support de couche (5) étant enroulé complètement sur un rouleau (22) après l'impression au moyen du procédé d'impression électrophotographique, **caractérisé en ce que** la couche (2, 3, 4) est formée à partir de matériaux différents et au moins l'une des couches (2, 3, 4) est formée à partir de plusieurs couches partielles (7, 8, 9, 10, 11) agencées les unes sur les autres.

2. Procédé selon la revendication 1, **caractérisé en ce que** la couche (2, 3, 4) est transférée dans un processus d'impression sur la pièce (1), la couche (2, 3, 4) étant de préférence placée, de préférence au moyen d'un tampon (6), contre la pièce (1) ou la pièce (1) état placée contre la couche (2, 3, 4).

3. Procédé selon la revendication 1 ou 2, **caractérisé en ce que**, simultanément, plusieurs des pièces (1a, 1b, 1c) sont construites, plusieurs des couches (2a, 2b, 2c, 3a, 3b, 3c, 4a, 4b, 4c) préformées étant transférées simultanément sur différentes pièces desdites pièces (1a, 1b, 1c).

4. Procédé selon l'une des revendications 1 à 3, **caractérisé en ce que** la couche (2, 3, 4) est formée par xérographie, de préférence au moyen d'une imprimante laser, sur le support de couche (5).

5. Procédé selon l'une des revendications 1 à 4, **caractérisé en ce que** plusieurs des couches (2, 3, 4) sont agencées les unes à côté et/ou derrière les autres sur le support de couche (5) et le support de couche (5) est agencé, en vue du transfert de la couche (2, 3, 4) respective, progressivement dans une position de transfert, dans laquelle la couche (2, 3, 4) respective peut être transférée sur la pièce (1).

6. Procédé selon l'une des revendications 1 à 5, **caractérisé en ce que** le support de couche (5) est formé par une feuille ou un papier, en particulier un papier de silicone, un papier de cire ou un papier revêtu par du polytétrafluoroéthylène.

7. Procédé selon l'une des revendications 1 à 6, **caractérisé en ce que**, pour l'agencement du support de couche (5) dans la position de transfert respective, une position du support de couche (5) et/ou de la couche (2, 3, 4) est déterminée au moyen d'un capteur, de préférence d'une caméra, et le support de couche (5) est de préférence pourvu d'un marquage, à l'aide duquel sa position peut être constatée.

8. Procédé selon l'une des revendications 1 à 7, **caractérisé en ce que** la couche (2, 3, 4) est détachée de l'élément support (5) par chauffage, de préférence au moyen d'un rayonnement infrarouge ou au moyen d'un laser, et/ou sous l'effet d'une force d'attraction ou de répulsion électrique et/ou magnétique et/ou par des ultrasons.

9. Procédé selon l'une des revendications 1 à 8, **caractérisé en ce que** la couche (2, 3, 4) est formée à partir de céramique, de verre, d'un matériau synthétique, de cire, d'un oxyde métallique et/ou d'un métal et le cas échéant d'un matériau support pour ceux-ci.

10. Procédé selon l'une des revendications 1 à 9, **caractérisé en ce que** les couches partielles (7, 8, 9, 10, 11) sont agencées successivement sur l'élément support (5).

11. Procédé selon l'une des revendications 1 à 10, **caractérisé en ce qu'**un moyen pour dissoudre un matériau support de la couche (2, 3, 4) est appliqué, de préférence pulvérisé, sur la couche (2, 3, 4), après qu'elle a été transférée sur la pièce (1), le solvant étant de préférence appliqué de telle sorte qu'il dissout le matériau support de la couche (2, 3, 4) et, dans une zone de la pièce (1) sur laquelle la couche est placée (2, 3, 4), il dissout le matériau support de la pièce (1), de telle sorte que la couche (2, 3, 4) se relient l'une à l'autre, avec interconnexion des matériaux support de la couche (2, 3, 4) et de la pièce (1).

12. Procédé selon l'une des revendications 1 à 11, **caractérisé en ce que** la pièce (1) est traitée thermiquement, de préférence frittée, la pièce (1) dans sa totalité ou chaque couche individuelle des couches (2, 3, 4) ou plusieurs des couches (2, 3, 4) simultanément, après son/leur agencement sur la pièce, étant de préférence chauffée(s), de préférence au moyen d'un rayon laser.

13. Dispositif pour la construction successive par couches d'une pièce (1), qui présente un dispositif d'impression électrophotographique (12) pour la formation (12) d'une couche (2, 3, 4) sur un support de couche (5) et un dispositif (19) pour le transfert de la couche (2, 3, 4) à partir du support de couche (5) sur la pièce (1), le dispositif d'impression électrophotographique (12) étant prévu pour enrouler complètement le support de couche (5) imprimé par la couche (2, 3, 4) sur un rouleau (22), qui est conçu pour l'utilisation dans le dispositif (19) de transfert, **caractérisé en ce que** le dispositif d'impression (12) est prévu pour former la couche (2, 3, 4) à partir de matériaux différents et au moins l'une des couches (2, 3, 4) à partir de plusieurs couches partielles (7, 8, 9, 10, 11) agencées les unes sur les autres.

14. Dispositif selon la revendication 13, **caractérisé en ce que** le dispositif (19) de transfert est conçu pour relier la couche (2, 3, 4) à la pièce (1) et la détacher du support de couche (5), le support de couche (5) pouvant de préférence être déplacé vers la pièce (1) et/ou la pièce (1) pouvant de préférence être déplacée vers le support de couche (5).

15. Support de couche (5) pourvu d'un rouleau (22), des couches (2, 3, 4) étant agencées sur le support de couche (5) qui est enroulé complètement sur le rouleau (22), lesquelles couches étant prévues pour la construction par couches d'une pièce (1) et le rouleau (22) étant conçu pour être utilisé dans un dispositif (19) pour le transfert des couches (2, 3, 4) à partir du support de couche (5) sur une pièce (1), les couches (2, 3, 4) étant appliquées sur le support de couche (5) au moyen d'un procédé d'impression électrophotographique, **caractérisé en ce qu'**au moins l'une des couches (2, 3, 4) est formée à partir de matériaux différents et au moins l'une des couches (2, 3, 4) est formée à partir de plusieurs couches partielles (7, 8, 9, 10, 11) agencées les unes sur les autres.
